# EUROPEAN PATENT APPLICATION

(11) **EP 2 908 514 A1**
(43) Date of publication of application: **19.08.2015**
(21) Application number: 13846038.1
(22) Date of filing: 06.09.2013
(51) Int. Cl.: H04N 5/232

(54) **INTELLIGENT MONITORING TERMINAL AND VIDEO MONITORING METHOD**

(30) Priority: 12.10.2012 CN 201210385416
(71) Applicant: ZTE Corporation, Shenzhen, Guangdong 518057 (CN)
(72) Inventor: WANG, Dong, Shenzhen Guangdong Province 518057 (CN); LIAO, Kai, Shenzhen Guangdong Province 518057 (CN); ZENG, Gang, Shenzhen Guangdong Province 518057 (CN)
(74) Representative: Novagraaf Technologies
(86) International application number: PCT/CN2013/083081
(87) International publication number: WO 2014/056376

(57) **Abstract**

An intelligent monitoring terminal and a video monitoring method are disclosed. The intelligent monitoring terminal comprises: an acquiring component, configured to acquire video data; a monitoring component, configured to monitor whether an object enters a monitoring range or not, and send a monitoring result to a controlling component; and the controlling component, configured to, when the monitoring component determines that an object enters the monitoring range, control the acquiring component to aim at the monitored object, acquire a video image of the object, and control a warning component to give an alarm. The intelligent monitoring terminal of the present invention is controlled by a monitoring controller in a normal condition, independently processes an unexpected event in the case of emergency, solves the defect existing in current monitoring terminals, greatly enhances the capabilities such as monitoring, protection, forensics thereof, and exerts the capability of the monitoring terminal to a maximum extent, so that the property can be protected, and value maximization is realized.

## Description

### Technical Field

The present invention relates to the technical field of video monitoring, including e.g., an intelligent monitoring terminal and video monitoring method.

### Background

Video monitoring technical is an important technical in the present monitoring field, and is widely applied to various occasions with its good timeliness, intuition and accuracy. Most of the present video monitoring systems deploy a pan-and-tilt camera at the monitoring point, process the video data acquired in real time by coding and compression, transfer to a video monitoring controller, and perform image analysis, give an alarm or record into a video file by the video monitoring controller, and archive for later evidence.

As monitoring terminals exist at numerous public places such as companies, shops and office buildings, the role of video monitoring is more and more prominent. However, a criminal would think of destroying monitoring terminals when he attempts to commit crime so as to achieve a purpose of destroying evidence or avoiding collection of evidence. The present monitoring terminals can only report an alarm and prevent a simple violent destruction, and is very limited for forensics in the crime scene in case that the criminal covers up the evidence, so that the monitoring value is greatly reduced.

### Summary

An intelligent monitoring terminal and video monitoring method are provided in the present invention, to solve the problem in the related art that monitoring terminals cannot provide effective monitoring.

According to one aspect of the present invention, an intelligent monitoring terminal is provided, comprising: an acquiring component, configured to acquire video data; a monitoring component, configured to monitor whether an object enters a monitoring range or not, and send a monitoring result to a controlling component; and the controlling component, configured to, when the monitoring component determines that an object enters the monitoring range, control the acquiring component to aim at the monitored object, acquire a video image of the object, and control a warning component to give an alarm.

The terminal further comprises: an analysing component, configured to analyze the video image of the object, judge whether an human shape probability of the object reaches a set threshold or not, and send an analysing result to the controlling component; when the analysing component determines that the human shape probability of the object reaches the set threshold, the controlling component controls the warning component to play a warning sound for shocking and reminding; or when the analysing component determines that the human shape probability of the object does not reach the set threshold, the controlling component controls the warning component to play warning sound and light for warning and driving.

The terminal further comprises: a physical protection component, set outside the acquiring component, which is a double-layer protection cover; and after the analysing component determines that the physical protection component is covered, the controlling component controls the physical protection component to open an outer layer of the double-layer protection cover and notifies a monitoring controller.

The terminal further comprises: a defending component, configured to spray the object with a defensive irritating substance or a tracing substance under control of the controlling component.

The controlling component is further configured to backup a position of the acquiring component before controlling the acquiring component is controlled to aim at the monitored object, and control the acquiring component to return to the position backuped previously, after the monitoring component determines that the object has left the monitoring range.

According to another aspect of the present invention, a video monitoring method is further provided, comprising: monitoring, by a monitoring component, whether an object enters the monitoring range or not; controlling, by a controlling component, when the monitoring component determines that an object enters the monitoring range, an acquiring component to aim at the monitored object, acquire a video image of the object, and the warning component to give an alarm.

Controlling the acquiring component to aim at the monitored object, acquire the video image of the object and the warning component to give an alarm comprises: analysing, by an analysing component, the video image of the object, judging whether an human shape probability of the object reaches a set threshold or not; controlling, by the controlling component, when the analysing component determines that the human shape probability of the object reaches the set threshold, the warning component to play a warning sound for shocking and reminding; or controlling, by the controlling component, when the analysing component determines that the human shape probability of the object does not reach the set threshold, the warning component to play warning sound and light for warning and driving.

After the monitoring component determines that an object enter the monitoring range, the method further comprises: controlling, by the controlling component, after the analysing component determines that the physical protection component is covered, the physical protection component to open an outer layer of the double-layer protection cover and notifying a monitoring controller.

After the monitoring component determines that an object enters the monitoring range, is the method further comprises: controlling, by the controlling component, a defending component to spray the object with a defensive irritating substance or a tracing substance.

Backuping, by the controlling component, a position of the acquiring component before the acquiring component is controlled to aim at the monitored object; and controlling, by the controlling component, the acquiring component to return the position backuped previously, after the monitoring component determines that the object has left of the monitoring range.

Through the technical solution provided by the present invention, the intelligent monitoring terminal of the present invention is controlled by a monitoring controller in a normal condition, and can independently process an unexpected event in the case of emergency, so as to solve the defect existing in current monitoring terminals, greatly enhance the capabilities such as monitoring, protection, forensics thereof, and exert the capability of the monitoring terminal to a maximum extent, so that the property can be protected, and value maximization is realized.

### Description of the Drawings

Drawings, provided for further understanding of the present invention and forming a part of the specification, are used to explain the present invention together with embodiments of the present invention rather than to limit the present invention. In the drawings:
Fig. 1 shows a structural schematic diagram of an intelligent monitoring terminal according to an embodiment of the present invention; and
Fig. 2 shows a flowchart of a video monitoring method according to an embodiment of the present invention.

### Detailed Description of the Embodiments

The present invention will be further described in detail hereafter with reference to the accompany drawings and embodiments. Understandably, the embodiments described herein are intended to interpret the present invention rather than restrict the present invention. It should be noted that the embodiments in the present application and the features in the embodiments can be combined with each other in the condition of no conflict.

An monitoring method and system based on an intelligent monitoring terminal are provided in the embodiment of the present invention, where the intelligent monitoring terminal can operate in multiple modes, such as normal mode, warning mode and defensive mode, serve for a monitoring controller, intelligently and independently process an unexpected event, and provide powerful aid for forensic, so as to enhance its monitoring capability and value.

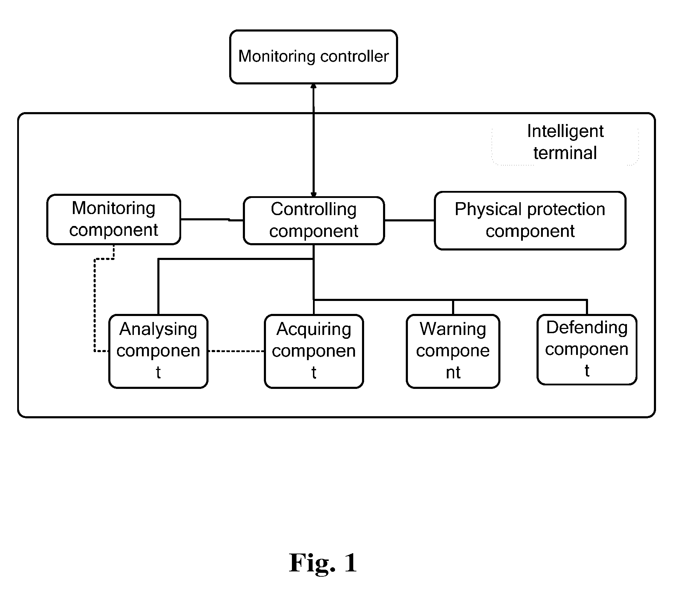

As shown in Fig. 1, an embodiment of the present invention refers to an intelligent monitoring terminal, wherein the intelligent monitoring terminal comprises:
an acquiring component, configured to acquire video data, wherein the acquiring component comprises various cameras, image collectors, etc.;
a monitoring component, configured to monitor whether an object enter a monitoring range or not, and send a monitoring result to a controlling component, wherein the monitoring component is of multiple modes, such as ultrasonic wave, thermomagnetic wave, and stereo imaging, and can detect the distance and size of the object and determine the position of the detected object; and
the controlling component, configured to send the acquired video data to the monitoring controller when the monitoring component determines that no object enters the monitoring range, and then the monitoring controller performs control; and to control the acquiring component to aim at the monitored object when the monitoring component determines that an object enters the monitoring range, acquire a video image of the object and control a warning component to give an alarm. The warning component generally comprises a micro playback device in any form or structure, a warning device, etc.

The intelligent monitoring terminal may further comprise:
an analysing component, configured to analyze the video image of the object, judge whether the human shape probability of the object reaches a set threshold or not, and send an analysing result to the controlling component; when the analysing component determines that the human shape probability of the object reaches the set threshold, the controlling component controls the warning component to play a warning sound for shocking and reminding; or when the analysing component determines that the human shape probability of the object does not reach the set threshold, the controlling component controls the warning component to play warning sound and light for warning and driving. The analysing component is provided with an image analysis function to identify the shape of the object in the image. The human shape probability of object indicates the level of similarity of the shape of the object in the image to the human shape; and the threshold of human shape probability may be obtained from experience, experiments and/or simulation.

A physical protection component, set outside the acquiring component, which is a double-layer protection cover; after the analysing component determines that the physical protection component is covered (e.g., sprayed), the controlling component controls the physical protection component to open the outer layer of the double-layer protection cover and notifies the monitoring controller. The module is set mainly for the case that the behavior of the criminal could hardly be identified since the criminal is possible to make the monitored video image blurred by spraying or sprinkling the camera (acquiring component) with a powder substance or by other methods.

A defending component, configured to spray the object with a defensive irritating substance or a tracing substance under control of the controlling component. The defending component comprises a device which is capable of spraying a substance such as defensive dry powder or liquid in a short distance. The module is used mainly for capturing a suspect, because the sprayed substance may reduce the escaping speed of the suspect, make a certain mark on the suspect, or make the suspect have a certain smell, so that the suspect can be traced by police dogs or other means.

In addition, before the acquiring component is controlled to aim at the monitored object, the controlling component backups firstly a position of the acquiring component; and after the monitoring component determines that the object has left the monitoring range, the controlling component controls the acquiring component to return the position backuped previously, the intelligent monitoring terminal returns a normal operation state, and the video monitoring controller performs control.

In addition, the present invention further refers to a video monitoring method, wherein the video monitoring method comprises:
a. an intelligent monitoring terminal is installed in a monitoring site, and is configured data, such as basic communication information, optional operation states and warning records for storing and enabling.

In the step, after the intelligent terminal is correctly installed and connected, firstly, it is detected whether the communication is normal or not; and then the data is configured, such as basic communication information, optional operation states and warning records for performing storage and enabling.
b. In a normal operation state (no object enters the predetermined monitoring region), the intelligent monitoring terminal is controlled by a monitoring controller, and the normally acquired video data is transmitted to the monitoring controller.

In the step, the intelligent monitoring terminal is in a normal operation state, and the acquired video data can be directly transferred to the monitoring controller, or be cached first and then transferred to the monitoring controller.
c. After the monitoring component detects that an object enters the monitoring range (monitoring region), firstly the shape size of the object is analysed. When the shape size of the object is smaller than a preset shape size threshold, the object is considered to be a tiny object which can be ignored, and is processed as the normal operation state, switching to step b; and when the shape size of the object is larger than the preset shape size threshold, switching to step d.

In this step, the monitoring component determines by monitoring the distance and size of the surrounding object.
d. The controlling component makes a backup for the current position of the camera (acquiring component), controls the camera to arrive at a specified position and aim at the detected object, and notifies the analysing component to analyze the image shape.
e. The analysing component analyses the video image acquired by the camera. It is considered that someone enters the monitoring region when the analysing component determines that the shape of the object reaches the set threshold, and the controlling component is notified to enter an alarm state and perform intelligent independent processing for defence. A frame of alarm image is inserted by the acquiring component into the acquired real-time image. No processing is performed when the current data transmission mode is a real-time data upload mode, and when the current data transmission mode is a non-real-time data upload mode, the current acquired video image data may be prior to uploaded in real time, while the cache data is kept to be remained in the terminal buffer memory; and the controlling component notifies the warning component to play a warning sound for short-time shocking and reminding. In addition, the controlling component informs the monitoring controller the information about that the object enters the monitoring range.

When the analysing component determines that the shape of the object does not reach the set threshold, it is considered that an animal (e.g., a pet) enters the monitoring range, and the controlling component notifies the warning component to play warning sound and light for warning and driving, and informs the monitoring controller the information about that an object enters the monitoring range.

When the analysing component detects that the image is suddenly blurred (the suspect sprays the camera with pigments or sprinkles other powder substances), it notifies the controlling component, so that the controlling component controls the physical protection component to bounce off the outer layer of the double-layer protection cover and notifies the monitoring controller.

In addition, the controlling component may also control the defending component to spray the object with a defensive irritating substance or a tracing substance within the detection range for self-protection, and to implement tracing for the criminal invading the monitoring range. For example, the controlling component can spray a defensive irritating substance or a tracing substance when the monitoring component determines that the object has not left (the set time, which may also be other time) after the warning component plays a voice alarm for 10 seconds, or after the analysing component detects that the image is suddenly blurred, the controlling component controls the defending component to spray the defensive irritating substance or tracing substance. The tracing substance may be a substance having a special smell, and can be traced by police dogs or other means during the tracing process.
f. After the monitoring component detects that the object leaves the detection range region, the controlling component is notified, and the controlling component controls the camera to return the position backuped previously and return to the normal operation state.

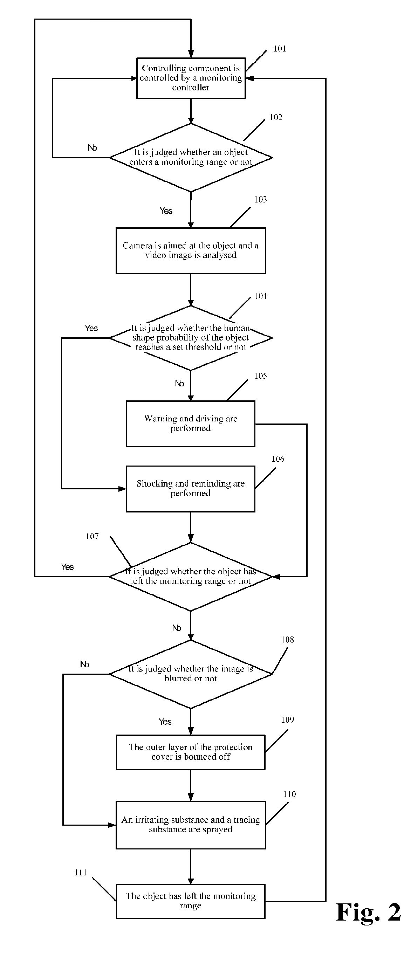

The flow processing procedure is described below with reference to Fig. 2, in a specific operation scene of an intelligent monitoring terminal as example.

An intelligent monitoring terminal is installed at an effective position to accomplish correct project deployment, and then the initial configuration is performed; firstly, the intelligent terminal is correctly installed and connected; and secondly, a management and maintenance station is logged in, data, such as basic communication information, optional operation states and warning records, is configured for storing and enabling.

After the intelligent monitoring terminal enters a normal operation state, the flow for performing video monitoring comprises as follows:
step 101, the controlling component of the intelligent monitoring terminal is controlled by the monitoring controller, and is used for controlling to acquire video data in real time and transfer to the monitoring controller.
Step 102, the monitoring component judges whether an object enters a monitoring range or not, when the monitoring component determines that an object enters the monitoring range, it is switched to step 103, when the monitoring component determines that no object enters the monitoring range, it is switched to step 101. Assuming that an object A enters the monitoring region and the monitoring component detects that the size of the object A meets the requirement of size, it is entered an alarm mode.
Step 103, the controlling component makes a backup for the current position of camera, and controls the camera to arrive at a specific position and aim at the object A, so as to acquire a video image and transfer data, at the meaning time, notify the analysing component to analyze the image shape, then it is switched to step 104.
Step 104, the analysing component analyses whether the human shape probability of the object reaches a set threshold or not, when the analysing component determines that the human shape probability of the object reaches the set threshold, it is switched to step 106, when the analysing component determines that the human shape probability of the object does not reach the set threshold, it is switched to step 105.
Step 105, when the human shape probability of the object A does not reach the set threshold, the object A is considered to be an animal, then the controlling component controls the warning component to play warning sound and light for warning and driving, then it is switched to step 107.
Step 106, when the human shape probability of the object A reaches the set threshold, the object A is considered to be human, then the controlling component notifies the warning component to play a warning sound for short shocking and reminding, and transfer an alarm event to the monitoring controller, and the monitoring controller processes the alarm, and notifies the police to inspect, then it is switched to step 107.
Step 107, it is judged whether the object A has left the monitoring range or not, when the judgment result is that the object A has left the monitoring range, it is switched to step 101, when the judgment result is that the object A has not left the monitoring range, it is switched to step 108.
Step 108, when the person A gets closer to the camera, the monitoring component continuously notifying the controlling component the position information. The camera traces and acquires a video image of the object A, and inserts a frame of alarm image into the acquired real-time image, without intervening the subsequent real-time uploaded data mode; and then the analysing component judges whether the image is suddenly blurred, when the image is suddenly blurred, it is switched to step 109, when the image is not suddenly blurred, it is switched to step 110.
Step 109, when the person A sprays and destroys the acquiring device at a short distance, the analysing component detects that the image is suddenly blurred, notifies the controlling component to control to bounce off the outer layer of the double-layer protection cover, and notifies the monitoring controller about the event, it is switched to step 110.
Step 110, the intelligent monitoring terminal enters a defensive mode, so that the defending component spraying the person A with an irritating substance and a traceable substance within the monitoring range to perform self-protection, it is switched to step 110. The investigator arrives at the scene quickly, and can quickly trace the criminal according to the tracing substance source in a short period, present evidence with the surveillance video, and bring the criminal to justice.

It should be noted that it is not necessary to carry out steps 109 and 110 in sequence strictly. In step 109, before the double-layer protection cover is bounced off, defence may be carried out, and the defending component may spray the person A with a defensive irritating substance and a tracing substance for self-protection.

Step 111, when the person A has left, the position of the camera is returned to the backup position, and a frame of ending alarm image is inserted into the real-time image acquiring image, so as to be facilitate to statistic the image by the monitoring controller during analysing the image . Meanwhile, the intelligent monitoring terminal returns to the normal operation mode, it is switched to step 101.

It can be seen from the above-mentioned embodiments that the intelligent monitoring terminal of the present invention is controlled by a monitoring controller in a normal condition, independently processes an unexpected event in the case of emergency, solves the defect existing in current monitoring terminals, greatly enhances the capabilities such as monitoring, protection, forensics thereof, and exerts the capability of the monitoring terminal to a maximum extent, so that the property can be protected, and value maximization is realized.

For exemplary purposes, the preferred embodiments of the present invention has already been disclosed, a person skilled in the art would recognize that various improvements, additions and substitutions are also possible; therefore, the scope of the present invention should not be restricted to the above-mentioned embodiments.

### Industrial Applicability

The method and system of the intelligent monitoring terminal provided by the present invention can be operated in multiple modes, such as normal mode, warning mode and defensive mode, wherein the intelligent monitoring terminal can be served for a monitoring controller, intelligently and independently process an unexpected event, and provide powerful aid for forensic, so as to enhance its monitoring capability and value.

## Claims

1. An intelligent monitoring terminal, **characterized by** comprising:
an acquiring component, configured to acquire video data;
a monitoring component, configured to monitor whether an object enters a monitoring range or not, and send a monitoring result to a controlling component; and
the controlling component, configured to, when the monitoring component determines that an object enters the monitoring range, control the acquiring component to aim at the monitored object, acquire a video image of the object, and control a warning component to give an alarm.

2. The intelligent monitoring terminal according to claim 1, **characterized in that** the terminal further comprises:
an analysing component, configured to analyze the video image of the object, judge whether an human shape probability of the object reaches a set threshold or not, and send an analysing result to the controlling component; when the analysing component determines that the human shape probability of the object reaches the set threshold, the controlling component controls the warning component to play a warning sound for shocking and reminding; or when the analysing component determines that the human shape probability of the object does not reach the set threshold, the controlling component controls the warning component to play warning sound and light for warning and driving.

3. The intelligent monitoring terminal according to claim 2, **characterized in that** the terminal further comprises:
a physical protection component, set outside the acquiring component, which is a double-layer protection cover, after the analysing component determines that the physical protection component is covered, the controlling component controls the physical protection component to open an outer layer of the double-layer protection cover, and notifies a monitoring controller.

4. The intelligent monitoring terminal according to any of claims 1-3, **characterized in that** the terminal further comprises:
a defending component, configured to spray the object with a defensive irritating substance or a tracing substance under control of the controlling component.

5. The intelligent monitoring terminal according to claim 1, **characterized in that** the controlling component is further configured to backup a position of the acquiring component before the acquiring component is controlled to aim at the monitored object, and control the acquiring component to return to the position backuped previously, after the monitoring component determines that the object has left the monitoring range.

6. A video monitoring method, **characterized by** comprising:
monitoring, by a monitoring component, whether an object enters a monitoring range or not; and
controlling, by a controlling component, when the monitoring component determines that an object enters the monitoring range, an acquiring component to aim at the monitored object, acquire a video image of the object, and a warning component to give an alarm.

7. The video monitoring method according to claim 6, **characterized in that** controlling the acquiring component to aim at the monitored object, acquire the video image of the object, and the warning component to give an alarm comprises:
analysing, by an analysing component, the video image of the object, and judging whether an human shape probability of the object reaches a set threshold or not;
controlling, by the controlling component, when the analysing component determines that the human shape probability of the object reaches the set threshold, the warning component to play a warning sound for shocking and reminding; or,
controlling, by the controlling component, when the analysing component determines that the human shape probability of the object does not reach the set threshold, the warning component to play warning sound and light for warning and driving.

8. The video monitoring method according to claim 7, **characterized in that** after the monitoring component determines that an object enters the monitoring range, further comprising:
controlling, by the controlling component, after the analysing component determines that the physical protection component is covered, the physical protection component to open an outer layer of the double-layer protection cover, and notifying a monitoring controller.

9. The video monitoring method according to any of claims 6-8, **characterized in that** after the monitoring component determines that an object enters the monitoring range, further comprising:
controlling, by the controlling component, a defending component to spray the object with a defensive irritating substance or a tracing substance.

10. The video monitoring method according to claim 6, **characterized in that** backuping, by the controlling component, a position of the acquiring component before the controlling component controls the acquiring component to aim at the monitored object; and controlling, by the controlling component, the acquiring component to return the position backuped previously, after the monitoring component determines that the object has left the monitoring range.
